Europäisches Patentamt

European Patent Office

Office européen des brevets

(19)

(11) **EP 1 215 523 A2**

(12) **EUROPÄISCHE PATENTANMELDUNG**

(43) Veröffentlichungstag:
**19.06.2002 Patentblatt 2002/25**

(51) Int Cl.7: **G02B 27/09**

(21) Anmeldenummer: **01128591.3**

(22) Anmeldetag: **30.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **16.12.2000 DE 10062902**

(71) Anmelder:
• **Lissotschenko, Vitalij, Dr.**
  **44149 Dortmund (DE)**

• **Hentze, Joachim**
  **59457 Werl (DE)**

(72) Erfinder: **Davydenko, Vladimir**
  **44149 Dortmund (DE)**

(74) Vertreter: **Basfeld, Rainer, Dr. Dipl.-Phys. et al**
  **Patentanwaltskanzlei Fritz,**
  **Ostentor 9**
  **59757 Arnsberg (DE)**

(54) **Bestrahlungssystem mit Strahltransformation für die Erzeugung modulierter Strahlung**

(57) Bestrahlungssystem für die Erzeugung modulierter Strahlung umfassend mindestens einen Laser (1) und mindestens einen Modulator (6), sowie Abbildungsmittel, die die von dem Laser (1) ausgehende Strahlung zumindest teilweise auf den Modulator (6) abbilden können, wobei der Laser (1) in zwei zueinander senkrechten Richtungen (x, y) eine unterschiedliche Divergenz aufweist und wobei der Modulator (6) eine Modulation vermittels zumindest teilweiser Beugung des auf ihn auftreffenden Lichtes bewirken kann, wobei die Abbildungsmittel eine Vorrichtung (3) zur optischen Strahltransformation umfassen, durch die die Divergenz des Lasers (1) in einer ersten Richtung (x) mit der Divergenz des Lasers (1) in einer zweiten Richtung (y) vertauscht werden kann.

Fig.1b

EP 1 215 523 A2

**Beschreibung**

Die vorliegende Erfindung betrifft ein Bestrahlungssystem für die Erzeugung modulierter Strahlung umfassend mindestens einen Laser und mindestens einen Modulator, sowie Abbildungsmittel, die die von dem Laser ausgehende Strahlung zumindest teilweise auf den Modulator abbilden können, wobei der Laser in zwei zueinander senkrechten Richtungen eine unterschiedliche Divergenz aufweist und wobei der Modulator eine Modulation vermittels zumindest teilweiser Beugung des auf ihn auftreffenden Lichtes bewirken kann.

Ein Bestrahlungssystem der vorgenannten Art ist beispielsweise aus dem US-Patent US 5,521,748 bekannt. Bei einem der darin beschriebenen Bestrahlungssysteme wird ein Laserdiodenbarren mit in Richtung der Slow-Axis mehreren nebeneinander angeordneten Emissionszentren verwendet. Die Beugungsrichtung, innerhalb derer der Modulator das auf ihn auftreffende Licht zur Modulation beugt entspricht im wesentlichen der Slow-Axis. Dies erweist sich als nachteilig, weil die Divergenz des von dem Laserdiodenbarren ausgehenden Lichtes durch die gemäß dem US-Patent 5,521,748 verwendeten Abbildungsmittel nicht unter eine bestimmte Größe reduziert werden kann. Dies hat seinen Grund darin, dass aufgrund der vielen nebeneinander angeordneten Emissionszentren eine Multimodedivergenz in Richtung der Slow-Axis vorliegt.

Andererseits ist es wünschenswert, dass die auf den Modulator auftreffende Laserstrahlung in der Beugungsebene eine möglichst geringe Divergenz aufweist. Es ist daher das der vorliegenden Erfindung zugrundeliegende Problem, eine Bestrahlungsvorrichtung der eingangs genannten Art zu schaffen, bei der auch bei Verwendung eines Diodenlaserbarrens die Divergenz des auf den Modulator auftreffenden Laserstrahls in der Beugungsebene des Modulators möglichst klein ist.

Dies wird erfindungsgemäß dadurch erreicht, dass die Abbildungsmittel eine Vorrichtung zur optischen Strahltransformation umfassen, durch die die Divergenz des Lasers in einer ersten Richtung mit der Divergenz des Lasers in einer zweiten Richtung vertauscht werden kann. Somit kann, wenn der Laser als Laserdiodenbarren ausgeführt ist mit einer Anzahl von Emissionszentren, die in der ersten Richtung im wesentlichen nebeneinander angeordnet sind, in der Vorrichtung zur optischen Strahltransformation die Divergenz in der Slow-Axis mit der Divergenz der Fast-Axis getauscht werden. Da aber die Divergenz in der Fast-Axis mit geeigneten Abbildungsmitteln beugungsbegrenzt kollimiert werden kann, kann erfindungsgemäß in der Beugungsebene des Modulators eine sehr geringe Divergenz des auf den Modulator auftreffenden Lichts erzielt werden. Es ist mit dem erfindungsgemäßen Bestrahlungssystem durchaus möglich, Hochleistungslaser zu verwenden und trotzdem die Divergenz des auf den Modulator auftreffenden Lichtes in der Beugungsebene des Modulators so gering zu gestalten, dass auch Modulatoren mit kleinen Beugungswinkeln, beispielsweise mit Beugungswinkeln kleiner 6° verwendet werden können.

Hierzu können die Abbildungsmittel beispielsweise zwei Kollimatorlinsen umfassen, die jeweils in Strahlrichtung vor und hinter der Vorrichtung zur optischen Strahltransformation angeordnet sind und eine Kollimierung der von dem Laser ausgehenden Strahlung in der zweiten Richtung bewirken. Weiterhin können die Abbildungsmittel eine Fourierlinse umfassen, die zwischen der Vorrichtung zur optischen Strahltransformation und dem Modulator angeordnet ist, so dass die auf sie auftreffende Laserstrahlung in der ersten Richtung auf den Modulator abgebildet wird.

Vorzugsweise sind hierbei die Kollimatorlinsen als Zylinderlinsen mit Zylinderachsen in der ersten Richtung ausgebildet, wobei weiterhin vorzugsweise die Fourierlinse als Zylinderlinse mit Zylinderachse in der zweiten Richtung ausgebildet ist. Mit derartig gewählten Abbildungsmitteln lassen sich die Laserstrahlung in der ersten Richtung, die beispielsweise der Slow-Axis entsprechen kann und der zweiten Richtung, die beispielsweise der Fast-Axis entsprechen kann, einfach auf den Modulator fokussieren.

Gemäß einer bevorzugten Ausführungsform der vorliegenden Erfindung ist die Vorrichtung zur optischen Strahltransformation aus zwei Arrays einander gegenüberliegender refraktiver Flächen gebildet. Diese refraktiven Flächen können als konkav toroidale Flächen oder als Zylinderlinsenflächen ausgebildet sein. Insbesondere können die Torosachsen oder die Zylinderachsen der refraktiven Flächen gegenüber der Längsrichtung der Eintritts- bzw. Austrittsfläche der Vorrichtung zur optischen Strahltransformation innerhalb der Ebene der Eintritts- bzw. Austrittsfläche geneigt sein, vorzugsweise unter einem Winkel von 45° und/oder -45°. Mit einer derartigen Vorrichtung wird der Querschnitt des auf die Vorrichtung auftreffenden Strahles an einer in der Ausbreitungsrichtung liegenden Ebene gespiegelt, wobei diese Ebene einen Winkel von 45° zu der ersten und der zweiten Richtung, mithin zu der Slow-Axis und der Fast-Axis einnimmt. Es werden somit auf einfache Art und Weise die Divergenzen in Slow-Axis-Richtung und Fast-Axis-Richtung miteinander vertauscht.

Alternativ dazu oder zusätzlich dazu kann die Vorrichtung zur optischen Strahltransformation Prismenarrays oder Spiegelarrays umfassen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1a     eine Seitenansicht eines erfindungsgemäßen Bestrahlungssystems;

Fig. 1b    eine Draufsicht auf das Bestrahlungssystem gemäß Fig. 1a;

Fig. 2a    eine Draufsicht auf eine Vorrichtung zur optischen Strahlentransformation;

Fig. 2b    eine Ansicht gemäß dem Pfeil IIb - IIb in Fig. 2a;

Fig. 3a    eine perspektivische Ansicht eines Linsenelementes einer Vorrichtung zur optischen Strahlentransformation mit einem beispielhaften Strahlenbündel;

Fig. 3b    eine schematische Ansicht einer Strahlentransformation mit dem Linsenelement gemäß Fig. 3a;

Fig. 4    einen schematischen Schnitt längs der Linie IV-IV in Fig. 2b.

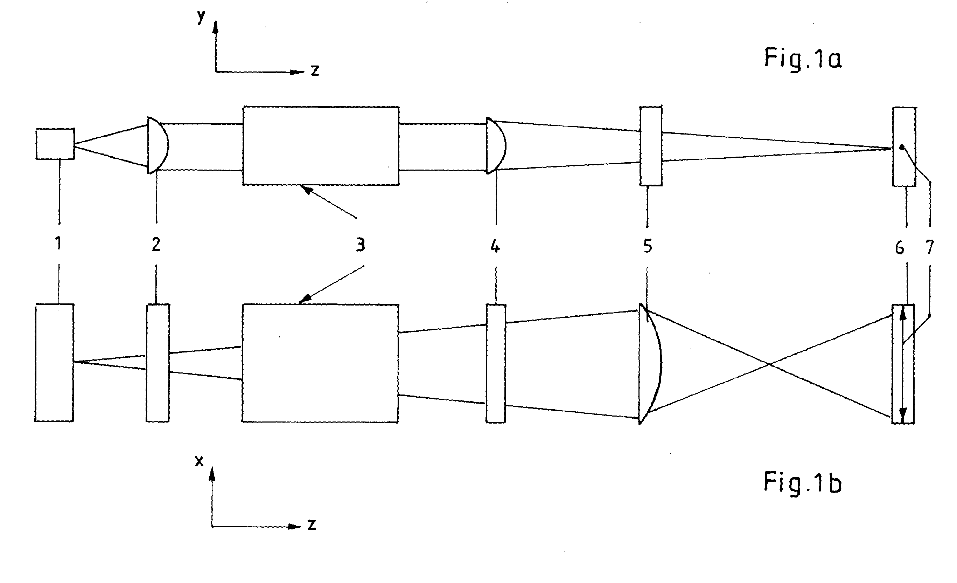

Wie aus Fig. 1 ersichtlich ist, umfasst ein erfindungsgemäßes Bestrahlungssystem einen Laser 1, der als Laserdiodenbarren ausgeführt ist. Ein derartiger Laserdiodenbarren weist in der Regel über seine in Fig. 1 in x-Richtung ausgerichtete Längserstreckung eine Vielzahl vom Emissionszentren auf. Die Divergenz des von einem einzelnen Emissionszentrum des Lasers 1 ausgehenden Lichtes ist in der xz-Ebene, d.h. in Richtung der Slow-Axis, kleiner als in der yz-Ebene, d.h. in der Fast-Axis. In z-Richtung schließt sich an den Laser 1 eine Kollimatorlinse 2 für die Fast-Axis an. Wie aus Fig. 1a ersichtlich ist, wird damit in der yz-Ebene das von dem Laser 1 ausgehende Licht parallelisiert.

Daran anschließend tritt das Licht in Strahlrichtung bzw. in z-Richtung in eine Vorrichtung 3 zur optischen Strahltransformation ein, von der ein Beispiel im folgenden noch näher beschrieben wird. In der Vorrichtung 3 zur optischen Strahltransformation werden die Fast-Axis-Anteile des Strahlquerschnittes mit den Slow-Axis-Anteilen vertauscht, wie dies im folgenden ebenfalls noch deutlich wird.

Nach Durchtritt durch die Vorrichtung 3 zur optischen Strahltransformation tritt der Strahl durch eine weitere Kollimatorlinse 4 für die Fast-Axis hindurch, die für eine Fokussierung des Lichtstrahles in der yz-Ebene auf einen Modulator 6 sorgt. Zwischen dem Modulator 6 und der zweiten Kollimatorlinse 4 ist eine Fourier-Linse 5 angeordnet, die ebenfalls wie die Kollimatorlinsen 2, 4 als Zylinderlinse ausgebildet ist. Bei der Fourier-Linse 5 ist jedoch die Zylinderachse im Gegensatz zu den Kollimatorlinsen 2, 4 in y-Richtung ausgerichtet.

In dem abgebildeten Ausführungsbeispiel ist nur das Lichtbündel eingezeichnet, das von einem der Emissionszentren des Lasers 1 ausgeht. Letztlich sorgt die Fourier-Linse 5 dafür, dass in der xz-Ebene eine derartige Abbildung auf den Modulator 6 stattfindet, dass das Licht sämtlicher Emissionszentren des Laserdiodenbarrens relativ gleichmäßig über die Längserstreckung des Modulators verteilt ist.

In Fig. 1 ist die Beugungsrichtung des Modulators 6 mit dem Bezugszeichen 7 versehen. Fig. 1 lässt sich entnehmen, dass die Ebene innerhalb der die Beugung durch den Modulator 6 stattfindet der xz-Ebene entspricht.

Beispielsweise können je nach Ansteuerung des Modulators 6 die aus dem Modulator austretende nullte oder erste Ordnung für die Bestrahlung beispielsweise einer Druckwalze eines Laserdruckers oder dergleichen verwendet werden.

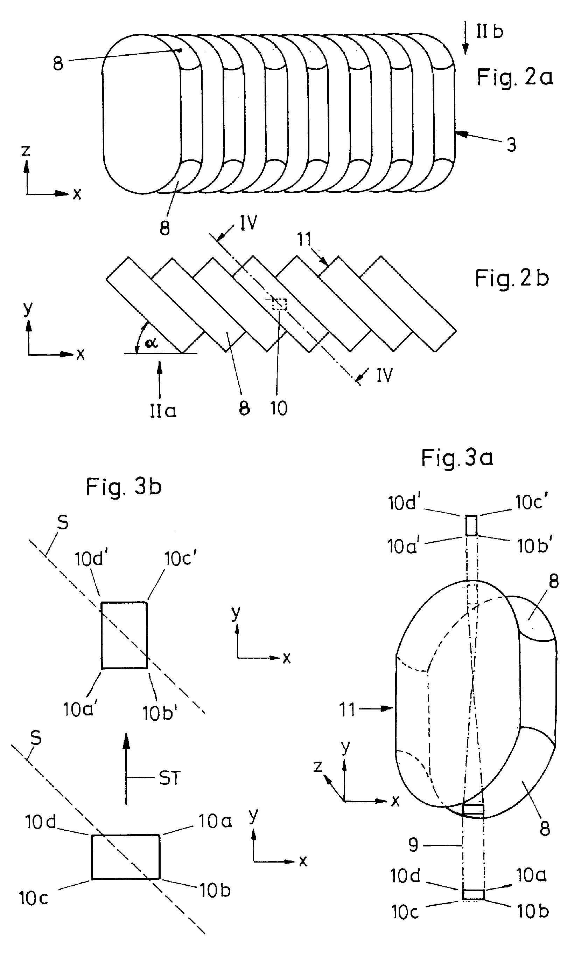

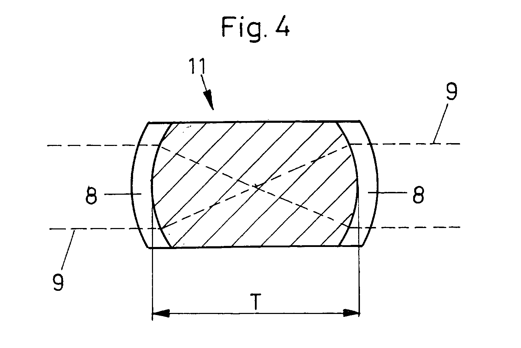

Aus Fig. 2 ist eine mögliche Ausführungsform einer Vorrichtung 3 zur optischen Strahltransformation ersichtlich, wie sie beispielsweise in der deutschen Patentanmeldung 100 36 787 beschrieben wird. Es handelt sich um einen im wesentlichen quaderförmigen Block aus einem transparenten Material, auf dem sowohl auf der Eintrittsseite als auch auf der Austrittsseite eine ganze Anzahl von konkaven toroidalen refraktiven Flächen 8 parallel zueinander angeordnet sind. Die Torusachsen der refraktiven Flächen 8 schließen mit der Basisseite der quaderförmigen Vorrichtung 3, die in x-Richtung verläuft, einen Winkel $\alpha$ von 45° ein. In Fig. 2b ist der diesem Winkel $\alpha$ entsprechende Winkel $\alpha$ zwischen der x-Richtung und der zu der Torusachse senkrechten seitlichen Begrenzung eines der Linsenelemente 11 eingezeichnet. In dem abgebildeten Ausführungsbeispiel sind etwa zehn konkave toroidale refraktive Flächen 8 nebeneinander auf jeder der beiden xy-Flächen der Vorrichtung 3 angeordnet. Jeweils zwei einander gegenüberliegende refraktive Flächen 8 bilden ein Linsenelement 11. Ein jedes der Linsenelemente 11 wirkt im wesentlichen wie eine Bikonvex-Zylinderlinse, bei der jedoch durch die konkave Querkrümmung der Fläche 8 beispielsweise astigmatischen Abbildungsfehlern entgegengewirkt werden kann. Aus Fig. 4 ist ersichtlich, dass die in z-Richtung gemessene Tiefe T der Linsenelemente 11 gleich der zweifachen Brennweite einer jeder dieser im wesentlichen bikonvexen Linsenelemente 11 ist. Dies entspricht

$$T = 2F_n.$$

Hierbei ist T die Tiefe der als Array von toroidalen Linsenelementen 11 ausgeführten Vorrichtung 3 zur optischen Strahltransformation und $F_n$ die Brennweite eines jeden der Linsenelemente 11 bei einem Brechungsindex n des gewählten Materials der Vorrichtung 3. Aus Fig. 4 ist ein schematischer Strahlengang eines Lichtstrahls 9 ersichtlich, der verdeutlicht, dass ein jedes der Linsenelemente 11 einen parallelen Lichtstrahl 9 wiederum in einen parallelen Lichtstrahl 9 überführt. Es bleibt anzumerken, dass Fig. 4 nur schematisch den Strahlengang verdeutlichen soll und keine exakte Wiedergabe des Strahlengangs durch die abgebildete geometrische Vorrichtung darstellt.

Aus Fig. 3 ist der Durchgang eines auf ein Linsenelement 11 auftreffenden Lichtstrahls 9 mit einem Querschnitt 10 durch eine erfindungsgemäße Vorrichtung 3 am Beispiel von Eckpunkten 10a, b, c, d des Querschnitts 10 ersichtlich. Die Vorrichtung 3 ist gemäß der Anordnung in Fig. 1 so ausgerichtet, dass die refraktiven Flächen 8 im wesentlichen xy-Flächen sind.

Aus Fig. 3a beziehungsweise Fig. 3b ist ersichtlich, dass der Querschnitt 10 des auf das Linsenelement 11 einfallenden Lichtstrahles 9 einem Rechteck entspricht, das in x-Richtung größer ausgedehnt ist als in y-Richtung. Nach dem Durchgang durch das Linsenelement 11 entspricht der Querschnitt 10 des Lichtstrahles 9 ebenfalls einem Rechteck. Dieses ist jedoch in y-Richtung größer ausgedehnt als in x-Richtung.

Aus der insbesondere aus Fig. 3b ersichtlichen schematischen Ansicht ergibt sich, dass durch den Durchtritt des Lichtstrahles 9 durch das Linsenelement 11 eine Strahltransformation vorgenommen wird, die durch den Pfeil ST in Fig. 3b verdeutlicht wird. Die durch das Linsenelement 11 vorgenommene Strahltransformation entspricht einer Spiegelung an der in Fig. 3b eingezeichneten Spiegelebene S, die parallel zur Strahlrichtung verläuft und sowohl gegenüber der x- als auch gegenüber der y-Richtung um 45° geneigt ist. Auf diese Weise wird zum einen erreicht, dass ein sich vor der Strahltransformation in x-Richtung erstreckendes Rechteck oder eine sich vorher in x-Richtung erstreckende Linie nach der Strahltransformation in y-Richtung erstreckt ist.

Weiterhin bewirkt die Spiegelung an der Spiegelebene S eine Vertauschung der Reihenfolge der Eckpunkte 10a, 10b, 10c, 10d des Querschnittes 10 des Strahles 9 derart, dass die vorher aufsteigend im Uhrzeigersinn geordneten Eckpunkte 10a, 10b, 10c, 10d nach der Strahltransformation als Eckpunkte 10a', 10b', 10c', 10d' im Gegenuhrzeigersinn aufsteigend geordnet sind, wie dies aus Fig. 3b deutlich ersichtlich ist.

Durch die Vertauschung der Ausdehnung in x-Richtung und der Ausdehnung in y-Richtung vermittels der Strahltransformation wird verhindert, dass beispielsweise aus einzelnen Abschnitten der Lichtquelle 1 hervorgehende Teilstrahlen aufgrund der vor der Vorrichtung 3 unter Umständen relativ starken Divergenz in x-Richtung einander überlappen, da nach dem Durchgang durch die Vorrichtung 3 nur noch eine beugungsbegrenzte Restdivergenz in x-Richtung vorhanden ist, wohingegen die Divergenz in y-Richtung der ursprünglichen Divergenz in x-Richtung von beispielsweise etwa 0,1 rad entspricht.

Durch die Spiegelung des Querschnittes 10 des Strahles 9 werden auch die Divergenzen in der Slow-Axis mit den Divergenzen in der Fast-Axis vertauscht. Dies sieht man daran, dass in Fig. 3b vor dem Durchtritt des Strahles 9 durch die Vorrichtung 3 die Verbindungslinie zwischen den Eckpunkten 10c und 10b, die der Slow-Axis entsprach in x-Richtung angeordnet. Nach der Strahltransformation bzw. nach dem Durchtritt durch die Vorrichtung 3 ist die Verbindungslinie zwischen 10b' und 10c' in y-Richtung angeordnet, wohingegen die sich vorher in y-Richtung erstreckende, der Fast-Axis entsprechende Verbindungslinie zwischen 10a und 10b jetzt in x-Richtung angeordnet ist als Verbindungslinie zwischen 10a' und 10b'.

Auf diese Weise wird erreicht, dass in der x-Richtung nur noch die beugungsbegrenzte Restdivergenz der durch die Kollimatorlinsen 2, 4 kollimierten Fast-Axis vorhanden ist. Damit weist der auf den Modulator auftreffende Lichtstrahl 9 in der Beugungsrichtung 7 bzw. in der Beugungsebene xz eine sehr geringe Divergenz auf.

Anstelle der in Fig. 2 bis Fig. 4 beispielhaft beschriebenen Vorrichtung 3 zur optischen Strahltransformation können beliebige andere Vorrichtungen verwendet werden, die eine entsprechende Funktion aufweisen. Dies können aus reinen Zylinderlinsen aufgebaute Vorrichtung sein. Es besteht jedoch auch die Möglichkeit ein Paar von Prismen-Arrays zu verwenden. Alternativ dazu kann auch ein Paar von Spiegel-Arrays verwendet werden. Es besteht auch die Möglichkeit die in den Fig. 2 bis 4 abgebildete Vorrichtung durch zwei gleichartig aufgebaute Fig. 2 entsprechende Arrays zu ersetzen, die dann in einem anderen Abstand zu einander angeordnet sind. Letztlich entscheidend ist nur die Eigenschaft der Vorrichtung 3, die Divergenz in der Slow-Axis mit der Divergenz in der Fast-Axis zu vertauschen.

## Patentansprüche

1. Bestrahlungssystem für die Erzeugung modulierter Strahlung umfassend mindestens einen Laser (1) und mindestens einen Modulator (6), sowie Abbildungsmittel, die die von dem Laser (1) ausgehende Strahlung zumindest teilweise auf den Modulator (6) abbilden können, wobei der Laser (1) in zwei zueinander senkrechten Richtungen (x, y) eine unterschiedliche Divergenz aufweist und wobei der Modulator (6) eine Modulation vermittels zumindest teilweiser Beugung des auf ihn auftreffenden Lichtes bewirken kann, **dadurch gekennzeichnet, dass** die Abbildungsmittel eine Vorrichtung (3) zur optischen Strahltransformation umfassen, durch die die Divergenz des Lasers (1) in einer ersten Richtung (x) mit der Divergenz des Lasers (1) in einer zweiten Richtung (y) vertauscht werden kann.

2. Bestrahlungssystem nach Anspruch 1, **dadurch gekennzeichnet, dass** der Laser (1) als Laserdiodenbarren ausgeführt ist mit einer Anzahl von Emissionszentren, die in der ersten Richtung (x) im wesentlichen nebeneinander angeordnet sind, wobei in der Vorrichtung (3) zur optischen Strahltransformation die Divergenz in der Slow-Axis mit der Divergenz der Fast-Axis getauscht werden kann.

**3.** Bestrahlungssystem nach Anspruch 2, **dadurch gekennzeichnet, dass** die auf den Modulator (6) auftreffende Laserstrahlung in der Beugungsebene (xz) des Modulators 6 eine Divergenz aufweist, die der kollimierten Divergenz der Fast-Axis entspricht.

**4.** Bestrahlungssystem nach einem der Ansprüche 1 bis 3, **dadurch gekennzeichnet, dass** die Abbildungsmittel zwei Kollimatorlinsen (2, 4) umfassen, die jeweils in Strahlrichtung vor und hinter der Vorrichtung (3) zur optischen Strahltransformation angeordnet sind und eine Kollimierung der von dem Laser (1) ausgehenden Strahlung in der zweiten Richtung (y) bewirken.

**5.** Bestrahlungssystem nach einem der Ansprüche 1 bis 4, **dadurch gekennzeichnet, dass** die Abbildungsmittel eine Fourierlinse (5) umfassen, die zwischen der Vorrichtung (3) zur optischen Strahltransformation und dem Modulator (6) angeordnet ist, so dass die auf sie auftreffende Laserstrahlung in der ersten Richtung (x) auf den Modulator (6) abgebildet wird.

**6.** Bestrahlungssystem nach einem der Ansprüche 4 oder 5, **dadurch gekennzeichnet, dass** die Kollimatorlinsen (2, 4) als Zylinderlinsen mit Zylinderachsen in der ersten Richtung (x) ausgebildet sind.

**7.** Bestrahlungssystem nach einem der Ansprüche 4 bis 6, **dadurch gekennzeichnet, dass** die Fourierlinse (5) als Zylinderlinse mit Zylinderachse in der zweiten Richtung (y) ausgebildet ist.

**8.** Bestrahlungssystem nach einem der Ansprüche 1 bis 7, **dadurch gekennzeichnet, dass** die Vorrichtung (3) zur optischen Strahltransformation aus zwei Arrays einander gegenüberliegender refraktiver Flächen (8) gebildet ist.

**9.** Bestrahlungssystem nach Anspruch 8, **dadurch gekennzeichnet, dass** die refraktiven Flächen (8) als konkav toroidale Flächen oder als Zylinderlinsenflächen ausgebildet sind.

**10.** Bestrahlungssystem nach Anspruch 9, **dadurch gekennzeichnet, dass** die Torusachsen oder die Zylinderachsen der refraktiven Flächen (8) gegenüber der Längsrichtung der Eintritts- bzw. Austrittsfläche der Vorrichtung (3) zur optischen Strahltransformation innerhalb der Ebene (xy) der Eintrittsbzw. Austrittsfläche geneigt sind, vorzugsweise unter einem Winkel ($\alpha$) von 45° und / oder -45°.

**11.** Bestrahlungssystem nach einem der Ansprüche 1 bis 7, **dadurch gekennzeichnet, dass** die Vorrichtung (3) zur optischen Strahltransformation Prismenarrays umfasst.

**12.** Bestrahlungssystem nach einem der Ansprüche 1 bis 7, **dadurch gekennzeichnet, dass** die Vorrichtung (3) zur optischen Strahltransformation Spiegelarrays umfasst.

Fig.1a

Fig.1b

EP 1 215 523 A2

Fig. 2a

Fig. 2b

Fig. 3a

Fig. 3b

Fig. 4